# EUROPÄISCHE PATENTSCHRIFT

(11) **EP 3 333 005 B1**
(45) Veröffentlichungstag und Bekanntmachung des Hinweises auf die Patenterteilung: **17.03.2021**
(21) Anmeldenummer: 17020393.9
(22) Anmeldetag: 30.08.2017
(51) Int. Cl.: H02J 7/00, H02M 7/00, B60L 3/00, B60L 53/30, B60L 53/22, B60L 53/10, B60L 58/21, B60L 58/19, B60L 58/13, B60L 53/62, H02J 7/02

(54) **MODULARE LEISTUNGSELEKTRONIK ZUM LADEN EINES ELEKTRISCH BETRIEBENEN FAHRZEUGS**
MODULAR POWER ELECTRONICS UNIT FOR CHARGING AN ELECTRICALLY POWERED VEHICLE
ÉLECTRONIQUE DE PUISSANCE MODULAIRE PERMETTANT LE CHARGEMENT D'UN VÉHICULE ÉLECTRIQUE

(30) Priorität: 09.12.2016 DE 102016123924
(43) Veröffentlichungstag der Anmeldung: 13.06.2018
(73) Patentinhaber: Dr. Ing. h.c. F. Porsche AG, 70435 Stuttgart (DE)
(72) Erfinder: Götz, Stefan, 85659 Forstern (DE); Reber, Volker, 74544 Michelbach an der Bilz (DE)

(56) Entgegenhaltungen:
- EP-A1- 2 815 913
- CN-A- 105 141 019
- US-A1- 2004 189 251
- US-A1- 2011 291 616
- US-A1- 2012 326 668
- US-A1- 2013 020 989
- US-A1- 2015 155 791
- ANANDARUP DAS ET AL: "A Pulse Width Modulation technique for reducing switching frequency for modular multilevel converter", POWER ELECTRONICS (IICPE), 2010 INDIA INTERNATIONAL CONFERENCE ON, IEEE, 28. Januar 2011 (2011-01-28), Seiten 1-6, XP031929665, DOI: 10.1109/IICPE.2011.5728082 ISBN: 978-1-4244-7883-5
- HAMADA S ET AL: "A new nonresonant mode zero-voltage switching DC-DC converter using phase-shifted PWM", 19900101, 1. Januar 1990 (1990-01-01), Seiten 27-33, XP006516755,

## Beschreibung

Die vorliegende Erfindung betrifft eine modulare Leistungselektronik zum Laden mindestens eines elektrisch betriebenen Fahrzeugs an einer Ladesäule und ein entsprechendes Verfahren.

Heutige Elektrofahrzeuge erlauben in der Regel zwei Lademodi. Für ein Laden an einer gewöhnlichen Wechselspannungs- oder Drehstromsteckdose verfügt ein Fahrzeug über ein Onbord-Ladegerät, das sowohl eine nötige Wandlung in Gleichstrom vornimmt als auch den jeweiligen Ladebetrieb steuert. Dieser AC-Lademodus ist jedoch aufgrund der verfügbaren Anschlussleistung, die in der Regel nicht mehr als 16A oder 32 A beträgt, und aufgrund der Installation des Ladegeräts mit ausreichend Leistung in der Ladegeschwindigkeit enorm eingeschränkt. Hieraus ergeben sich bei heutigen Elektrofahrzeugen Ladezeiten von mehreren Stunden pro 100km.

Aufgrund der hohen Ladezeiten für AC-Laden wurde DC-Laden mit Gleichspannung entwickelt. Im Gegensatz zum AC-Laden verfügt das entsprechende Fahrzeug hierbei nicht über ein eigenes Ladegerät. Stattdessen führt die fahrzeugexterne Ladesäule den Ladevorgang durch und formt ebenfalls Spannung und Strom so, wie es für das Laden einer jeweiligen Fahrzeugbatterie notwendig ist. Entsprechend vorgesehene DC-Ladeleitungen werden während des Ladevorgangs direkt mit entsprechenden Polen der Hochvoltbatterie des Fahrzeugs verbunden. Die Leistungen von DC-Ladestationen liegen derzeit bei bis zu 50kW. Wünschenswert wären allerdings Ladeleistungen im Bereich von mehr als 300kW, um Ladegeschwindigkeiten von mehr als 20km/min zu überbieten. Ferner wäre eine Ladespannung von bis zu 1000V anzustreben, um eine entsprechende Ladegeschwindigkeit zu erreichen. Damit könnte ein Nachladen während Reisen in Größenordnungen gebracht werden, die Kunden beim Tanken von Verbrennungsfahrzeugen gewohnt sind. Beispielhafte Details zum DC-Laden und den entsprechenden Vorgängen im Ladesystem und dem Fahrzeug sind bspw. in DIN EN 61851 beschrieben.

Verschiedene Kraftfahrzeughersteller planen, ihre Fahrzeuge für eine Ermöglichung höherer Ladegeschwindigkeiten von einer bisher üblichen 400V-Ladetechnik auf mindestens eine 800V-Ladetechnik zu heben, was aufgrund der vom Ladestand abhängigen Spannung und gewisser Varianz bei einer Konfiguration der Fahrzeugbatterie etwa einem Arbeitsbereich von 600V bis 950V, teilweise gar 420V bis 980V entsprechen kann. Aufgrund der hohen Spannung kann bei gleichem Strom eine höhere Leistung übertragen werden. So kann mit der Ladedauer eines der Hauptprobleme von elektrisch betriebenen Fahrzeugen gelöst werden.

Allerdings werden nicht alle Hersteller und Fahrzeuge auf 800V-Ladetechnik umstellen bzw. umgestellt werden. Trotzdem sollten eine Ladesäule und damit die dort verwendete Elektronik in der Lage sein, möglichst sämtliche Fahrzeuge, die zu laden sind, laden zu können.

Der Ladevorgang wird auch bei 800V-Fahrzeugen nicht konstant bei einer fixen Spannung betrieben. Ein Fahrzeug wird angeschlossen und das Fahrzeug stellt die Spannung der Säule vorerst ähnlich einer Laborspannungsquelle näherungsweise auf eine eigene Batteriespannung ein. Anschließend verbindet das Fahrzeug die eingestellte Spannung mit der Batterie, stellt eine Strombegrenzung an der Ladesäule ein und stellt die Spannungsgrenze in der Regel auf einen Wert zwischen der eigenen Batteriespannung und der Ladeschlussspannung ein. Die Einstellungen übergibt das Fahrzeug über eine digitale Kommunikation an die Ladesäule. Somit existieren zwei Grenzen, wobei die aktuell niedrigere die Regelung dominiert. Im Stromregelungsbereich, der gerade am Anfang und der Mitte des Ladevorgangs dominiert, nimmt die Spannung Werte deutlich über dem Maximum an. Folglich muss die Leistungselektronik der Ladesäule einen sehr hohen Spannungsbereich abdecken.

Da jedoch die Leistungselektronik gleichzeitig aufgrund von Grenzen der von der Leistungselektronik umfassten Bauteile, insbesondere der Halbleiter und der Induktivitäten, nicht den Strom in gleichem Maße anheben kann, sinkt in diesem Bereich die Ladeleistung unerwünscht. Herkömmliche Fahrzeuge mit niedriger Spannung können somit nicht mit der Spitzenleistung der Leistungselektronik geladen werden. Leere Batterien müssen ebenfalls erst in der Spannung ansteigen, bis aufgrund des maximal konstanten Stroms die Spitzenleistung erreicht wird, obwohl die Batterien gerade bei mittleren Ladezuständen die höchsten Ladeströme und -leistungen erlauben.

In der Praxis ist es von großer Bedeutung, dass aufgrund von Sicherheit für die Fahrzeuge als auch für die Nutzer die Hochvoltanschlüsse jedes Ladepunktes von allen anderen Ladepunkten sowie der Erde und dem jeweiligen Netzanschluss getrennt sein müssen. Bislang werden daher in der Praxis nur einzelne Ladesäulen bzw. entsprechend einzelne Ladepunkte eingesetzt bzw. verwendet, die vollständig eigene Netzanschlüsse besitzen und unabhängig voneinander agieren. Es existieren zwar auch Konzepte, gemäß welchen mehrere Ladesäulen kombiniert werden, doch bringen diese Konzepte gegenüber einer Lösung mit vollständig unabhängigen Ladesäulen nur sehr geringfügige Vereinfachungen in der Konstruktion und damit nur wenige Kosteneinsparungen mit sich. Eines dieser Konzepte sieht vor, dass die Ladesäulen über einen gemeinsamen Gleichspannungszwischenkreis, der folglich auch dasselbe elektrische Potential für alle Ladepunkte hat, und dezidierte DC/DC-Wandler für jeden Ladepunkt verfügen, die wiederum für die oben genannte Isolation galvanisch getrennt sein müssen.

Es ist ferner bekannt, eine galvanische Trennung nicht in der Leistungselektronik selbst, sondern in einem mit der Leistungselektronik zu verbindenden Transformator mit mehreren Abgriffen vorzusehen.

Allerdings löst auch dieser Ansatz nicht das eingangs erwähnte Problem einer abnehmenden Leistung bei Ladespannungen unter der Spitzenspannung.

Aus der US 7,690,37 und dem Artikel von A. Lesnicar, R. Marquardt, "An innovative modular multilevel converter topology suitable for a wide power range" Power Tech Conference Proceedings, 2003 IEEE Bologna, vol. 3, p.6, sind Schaltungen für einen modularen Multilevelkonverter MMC, der eine Umschaltung von serieller und Bypassverschaltung von Einzelmodulen erlaubt, bekannt. DE 10 2010 052 934, DE 10 2011 108 920 sowie S.M. Goetz, A.V. Peterchev, T. Weyh (2015) "Modular multilevel converter with series and parallel module connectivity: topology and control", IEEE Transactions on Power Electronics, vol. 30, pp. 203-215 beschreiben modulare Multilevelkonverter mit serieller und paralleler Konnektivität (MMSPC), die ferner eine Umschaltung von paralleler zu serieller Verschaltung von Modulen ermöglichen. Allerdings ist keine dieser beschriebenen Schaltungen für eine DC-Spannungswandlung geeignet, um möglichst sämtliche Fahrzeuge, die zu laden sind, laden zu können. Multiphasen-DC/DC-Wandler sind bekannt. So beschreibt bspw. die US 6,628,106 einen Multiphasen-DC/DC-Wandler mit kombinierter Strom- und Spannungsregelung. US 6,995,548 beschreibt eine Kombination mehrerer Phasen mit unterschiedlichen elektrischen Parametern, bspw. Nennstrom, um die Qualität des Stromes am Ausgang zu optimieren. US 7,596,007 beschreibt einen Multiphasen-DC/DC-Wandler und zugehörige Umrichter mit einer galvanischen Trennung in der Form eines sogenannten LLC-Anteils. All diese Schaltungen umfassen hart verdrahtete DC/DC-Wandler, die insbesondere parallel die jeweilige Ausgangsspannung erzeugen. Keine der beschriebenen Schaltungen eignet sich für das voranstehend genannte Problem aus der Ladetechnik. Keine der genannten Schaltungen ist in der Lage, Energie aus einem AC-Netz, vorzugsweise einem Mittelspannungsnetz zu beziehen, und/oder durch eine Rekonfiguration von Modulen oder Schaltungsanteilen zwischen Spannung und Strom umzuschalten.

Die DE 10 2012 212 291 A1 beschreibt eine Vorrichtung zum elektrischen Gleichstrom-Schnellladen, wobei ein DC/DC-Steller-Modul ein DC/DC-Tiefsetz-Steller-Modul ohne galvanische Trennung und zur galvanischen Trennung ein DC/DC-Resonanzwandler-Modul aufweist.

Aus der WO 2013/117425 A1 ist ein modularer Wandler für eine Ladestation bekannt, der mindestens zwei parallel zueinander geschaltete Lademodule umfasst. Das Artikel ANANDARUP DAS ET AL: "A Pulse Width Modulation technique for reducing switching frequency for modular multilevel converter",(POWER ELECTRONICS (IICPE), 2010 INDIA INTERNATIONAL CONFERENCE ON, IEEE, 28. Januar 2011 (2011-01-28)), sowie EP 2 815 913 A1, US 2013/020989 A1, US 2012/326668 A1, US 2011/291616 A1, CN 105 141 019 A, US 2015/155791 A1 und US 2004/189251 A1 offenbaren weiteren Multilevelkonverters und/oder modularen Konverters.

Vor dem Hintergrund des Standes der Technik war es demnach eine Aufgabe der vorliegenden Erfindung, eine Möglichkeit bereitzustellen, auch in einem niedrigen Spannungsbereich einen Aufladevorgang bei einem elektrisch betriebenen Fahrzeug mit möglichst maximaler Leistung durchführen zu können und dabei gleichzeitig eine galvanische Trennung zwischen Fahrzeug und externem Stromnetz zu gewährleisten.

Die vorliegende Erfindung löst diese Aufgabe durch eine Leistungselektronik mit den Merkmalen des unabhängigen Anspruchs 1. Weitere Ausgestaltungen sind den abhängigen Ansprüchen und der Beschreibung zu entnehmen.

In Ausgestaltung weist jedes der mindestens drei Module einen Gleichrichter auf.

Der jeweilige Gleichrichter der jeweiligen Module ist in Ausgestaltung ein passiver Gleichrichter, dem in weiterer Ausgestaltung als DC/DC-Wandler ein Tiefsetzsteller mit mindestens einem Ausgangskondensator nachgeschaltet ist, wodurch der eingehende Wechselstrom auf eine gewünschte Ausgangsspannung im Bereich von bspw. 400 V bis 950 V gebracht wird, um eine angeschlossene HV-Batterie eines Fahrzeugs aufzuladen. Der passive Gleichrichter kann bspw. mit sechs Gleichrichterdioden realisiert sein. Der jeweilige AC-Eingang der jeweiligen Module ist mit einer Ladedose bzw. einer Ladestation für ein- bis dreiphasigen Wechselstrom verbunden. Dabei ist zwischen die Ladedose bzw. die Ladestation und die jeweiligen AC-Eingänge der mindestens drei Module in der Regel ein Transformator zwischengeschaltet.

Alternativ dazu ist der jeweilige Gleichrichter der jeweiligen Module ein aktiver Gleichrichter. Allerdings ist der Einsatz von passiven Gleichrichtern wesentlich günstiger. Bei Verwendung von passiven Gleichrichtern ergibt sich im Stand der Technik das Problem, dass die passiven Gleichrichter aufgrund der fehlenden Steuerung in der Regel sehr hohe Verzerrungen und Einstreuungen in das Stromnetz ergeben, die von Netzbetreibern nicht toleriert werden und damit eine Forderung nach teuren Filtern nach sich zeihen und/oder aufgrund von Störungen sogar den Betrieb des Systems selbst beeinträchtigen. Die erfindungsgemäß vorgesehene Modularität erlaubt nun jedoch aufgrund der flexibel vornehmbaren Verschaltung der Module untereinander die Spannungsqualität (bspw. durch den THD ausgedrückt) und die Störungen gegenüber dem jeweiligen Netz deutlich zu verbessern.

Die vorgeschlagene Leistungselektronik ermöglicht eine Umschaltung der elektrischen Verschaltung der mindestens drei Module, wobei es sich dabei um DC-Module handelt, um je nach Anforderung bei näherungsweise konstanter Leistung entweder die Spitzenspannung bei Nennstrom oder eine verminderte Spannung bei erhöhtem Strom bereitzustellen. Die dynamische Bereichsumschaltung von Spannung und Strom wird durch die erfindungsgemäß vorgesehene Modularität erreicht, um die Spannung bspw. auf Kosten des Stromes in Stufen zu erhöhen. Eine derartige gestufte Bereichsumschaltung kann in Ausgestaltung der erfindungsgemäßen Leistungselektronik während eines Ladevorgangs genutzt werden. Beispielsweise wird zu Beginn des Ladevorgangs in der Regel eine geringe Spannung aber ein hoher Strom benötigt, während zum Ende des Ladevorgangs die erforderliche Spannung bei sinkendem Strom steigt.

Die erfindungsgemäße Leistungselektronik entspricht somit einer Art elektronischem Getriebe oder einem Kraftwandler, um eine Umschaltung zwischen Stromstärke und Spannung in gewissen Stufengrößen zu erlauben.

Die erfindungsgemäße Leistungselektronik wird im Folgenden auch als Modularer Multiphasen-Multilevel-DC/DC-Wandler, kurz MMMDDC oder M3D2C, bezeichnet. Ähnlich dem MMSPC für AC-Spannungen erlaubt der MMMDDC eine Rekonfiguration der Verschaltung der Module bzw. deren Ausgangskondensatoren in Serie und in Reihe.

Dabei kann die Rekonfiguration bei mehr als zwei implementierten Modulen auch gemischt seriell-parallel sein. Bei drei Modulen gibt es bspw. drei Möglichkeiten: alle parallel, alle seriell, ein Modul in Serie zu einer parallelen Kombination von zwei Modulen.

In Ausgestaltung der erfindungsgemäßen Leistungselektronik ist die Anzahl der Schaltelemente in Abhängigkeit der Anzahl Module gewählt.

In weiterer Ausgestaltung der erfindungsgemäßen Leistungselektronik ist mindestens ein Modul der mindestens drei Module innerhalb eines bestimmten Spannungs- und/oder Strombereichs steuer- und/oder regelbar.

Gemäß einer weiteren Ausführungsform der erfindungsgemäßen Leistungselektronik umfasst mindestens ein Modul mindestens einen mit dem Gleichrichter in Reihe geschalteten DC/DC-Wandler.

Gemäß einer weiteren Ausführungsform der erfindungsgemäßen Leistungselektronik sind die Schaltelemente als abschaltbare Halbleiterschalter, wie bspw. IGBT oder FET oder dergleichen, ausgeführt. Je nach Schaltungsausführung, d.h. je nach Art der eingesetzten Schaltelemente, insbesondere bei abschaltbaren Halbleiterschaltern kann die Rekonfiguration während eines Betriebs unterbrechungsfrei erfolgen. Alternativ dazu, bspw. wenn die Schaltelemente als nicht abschaltbare mechanische Schalter oder Thyristoren ausgeführt sind, kann die Rekonfiguration leistungslos erfolgen. Vor einer Umschaltung wird entsprechend die abgegebene Leistung unter eine gewisse Grenze vermindert, die ein schadfreies Umschalten der Schalter ermöglicht.

In noch weiterer Ausgestaltung der erfindungsgemäßen Leistungselektronik ist der jeweilige mindestens eine Gleichrichter galvanisch trennend.

In einer alternativen Ausgestaltung der erfindungsgemäßen Leistungselektronik ist der jeweilige mindestens eine DC/DC-Wandler des mindestens einen Moduls galvanisch trennend.

Wie bereits voranstehend beschrieben sind die Module der erfindungsgemäßen Leistungselektronik in weiterer alternativer Ausgestaltung jeweils über den mindestens einen AC-Anschluss mit einem galvanisch trennenden Transformator verbindbar.

Erfindungsgemäß werden Module mit niedrigerer Spannung als der Spitzenspannung und eine Schaltung verwendet, die sicherstellen kann, dass an keinem der mindestens drei Module eine höhere Spannung auftritt. Damit können trotz einer gewünschten hohen Ausgangsspannung bei serieller Verschaltung der Module Bauelemente mit deutlich geringerer Spannungsfestigkeit sicher eingesetzt werden. Die geringere Spannung der Bauelemente verringert die Kosten erheblich.

Gemäß einer möglichen Ausgestaltung der erfindungsgemäßen Leistungselektronik wird der jeweilige Anschluss der jeweiligen Module mit dem Transformator über jeweilige Unterspannungsabgriffe verbunden.

Durch eine Verwendung von phasenversetzten Wicklungen auf dem mindestens einen Gleichrichter, d.h. dem entsprechend speisenden Gleichrichter jedes Moduls, bspw. von Stern-/Dreieckwicklungen für eine 12-pulsige Gleichrichtung oder auch von Wickelsätzen mit dazwischenliegenden Phasenwinkeln, bspw. Z-Wicklungen, kann eine Verbesserung der Grundwellenharmonischen und durch Versatz der Schalttakte der DC/DC-Module eine Verbesserung der Schaltharmonischen erreicht werden. Auf diese Weise werden die Störungen der jeweiligen Module orthogonal zueinander. Da die Leistung jedes Moduls ferner nur noch einen kleinen Teil der Gesamtleistung beträgt, sinkt die Störung deutlich. Auf gleiche Weise kann die Ausgangsqualität auf Seiten des Fahrzeugs deutlich gesteigert werden. Hierzu sollte die Taktung der einzelnen Module entweder asynchron oder gezielt gegeneinander versetzt werden. Die Ausgangsqualität, insbesondere verbleibende Strom- und Spannungsrippel können bis zu quadratisch mit der Zahl der Module steigen. Der Versatz kann eine deutlich höhere effektive Schaltrate emulieren. Mit der Schaltrate steigt die Frequenz der Restrippel, wodurch die Ladung sinkt und entweder die Filter kleiner werden können oder bei gleicher Filtergröße deutlich bessere Werte erzielt werden können. Jedes Modul trägt nur noch einen kleinen Teil der Gesamtspannung bzw. des Gesamtstromes, wodurch eine jeweilige Amplitude des Stromrippels oder des Spannungsrippels sinkt.

Gemäß der erfindungsgemäßen Leistungselektronik ist vorgesehen, dass, im Falle eines Defekts eines der mindestens drei Module, durch eine spezifische Einstellung der Schaltzustände der jeweiligen Schaltelemente das defekte Modul isolierbar bzw. Ladestrom an dem defekten Modul vorbei leitbar ist.

Eine Verwendung von mehreren Modulen erhöht zudem eine Ausfallsicherheit des Systems. Fällt ein Modul im System aus, kann der betroffene Ladepunkt, an dem ein jeweiliges Fahrzeug geladen werden soll, trotzdem weiterbetrieben werden. Die vorgesehenen Schaltelemente erlauben in diesem Fall, defekte Module zu isolieren bzw. den Ladestrom an diesen defekten Modulen vorbeizuleiten. Sollten nicht mehr ausreichend viele funktionsfähige Module zur Verfügung stehen, kann jedoch der Maximalstrom oder die Maximalspannung beschränkt sein. Eine solche Einschränkung ist jedoch einem Totalausfall wie er beim Stand der Technik zu erwarten wäre, deutlich vorzuziehen.

In weiterer Ausgestaltung umfasst die Leistungselektronik mindestens ein Redundanzmodul, das im Falle eines Ausfalls eines der mindestens drei Module durch eine geeignete Änderung der Schaltzustände der jeweiligen Schaltelemente das defekte Modul funktionsgerecht ersetzt. Dadurch wird im Falle eines Ausfalls von Modulen ein uneingeschränkter Betrieb bis zu einem nächsten Service ermöglicht.

Ferner betrifft die vorliegende Erfindung ein entsprechendes Verfahren zum Laden mindestens eines elektrisch betriebenen Fahrzeugs unter Verwendung der voranstehend beschriebenen Leistungselektronik.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine schematische Darstellung eines vereinfachten Aufbaus einer Ladestation mit mehreren Ladepunkten zum Laden mehrerer elektrisch betriebener Fahrzeuge nach dem Stand der Technik.
Figur 2 zeigt eine schematische Darstellung eines vereinfachten Aufbaus einer Ladestation mit einem Ladepunkt zum Laden eines elektrisch betriebenen Fahrzeugs.
Figur 3 zeigt ein Diagramm eines Arbeitsbereichs einer Leistungselektronik.
Figur 4 zeigt schematische Darstellungen von Schaltplänen verschiedener Ausführungsformen der erfindungsgemäßen Leistungselektronik.
Figuren 5 bis 7 zeigen jeweilige Implementierungen von mehr als einem Ladepunkt für verschiedene Technologien zum Laden entsprechend mehrerer zu ladender Fahrzeuge.
Figur 8 zeigt in schematischer Darstellung eine Leistungselektronik.
Figur 9 zeigt in schematischer Darstellung einer Leistungselektronik mit N Modulen.
Figur 10 zeigt in schematischer Darstellung eine Ausführungsform der erfindungsgemäßen Leistungselektronik mit drei Modulen.
Figur 11 zeigt in schematischer Darstellung zwei weitere Ausführungsformen der erfindungsgemäßen Leistungselektronik.
Figur 12 zeigt eine schematische Darstellung einer noch weiteren Ausführungsform der erfindungsgemäßen Leistungselektronik.
Figur 13 zeigt in schematischer Darstellung eine zu der in Figur 12 gezeigten Ausführungsform alternative Ausführungsform der erfindungsgemäßen Leistungselektronik.

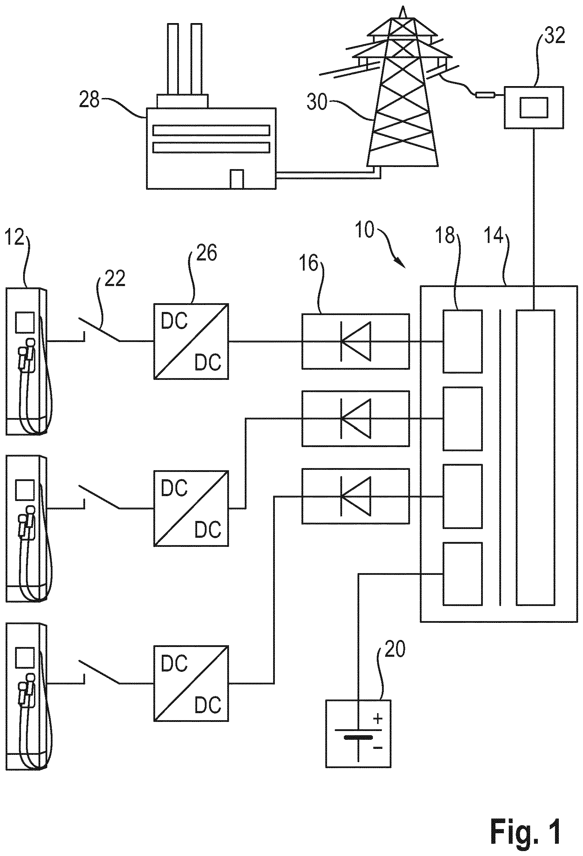

Figur 1 zeigt den vereinfachten Aufbau einer Ladestation 10 zum Laden mindestens eines elektrisch betriebenen Fahrzeugs, d.h. eines Plug-In-Fahrzeugs an einer von drei Ladesäulen 12. Die Ladestation 10 umfasst einen Leistungstransformator 14 mit Isolationswächter und Sicherheitsmaßnahmen. Der Leistungstransformator 14 wird von einem vorgeschalteten Transformator 32 eines Mittelspannungsnetzes mit einer Mittelspannung von bspw. 20 kV gespeist. Dieser wird seinerseits über ein mit Spannungen zwischen 110 und 380 kV betriebenes Höchst- und Hochspannungsnetz 30 von einem Kraftwerk 28 gespeist.

Die Ladestation 10 ist als zentraler Hochleistungs-AC/DC-Wandler ausgeführt. Die Ladestation 10 umfasst drei Gleichrichtermodule 16, welche mit drei galvanisch getrennten Ableitungen 18 des Leistungstransformators 14 verbunden und zu einer mehrpoligen Sammelschiene zusammengefasst sind, um ein Zwischennetz mit einer Gesamtleistung von 600 kW bereitzustellen. Eine vierte Ableitung 18 ist mit einem rückspeisfähigen Pufferspeicher 20 der Ladestation 10 verbunden. Als Netzfilter der Ladestation 10 fungiert dabei ein Leistungsfaktorkorrekturfilter der Gleichrichtermodule 16.

Der Leistungstransformator 14 und die Gleichrichtermodule 16 sind derart konfiguriert, dass die Gleichrichtermodule 16 eine Niedergleichspannung zwischen 950 V und 2000 V abgeben, wenn der Leistungstransformator 14 mit einer Mittelspannung von 20 kV gespeist wird. Diese noch ungeregelte Niedergleichspannung wird durch einen von drei einfachen Step-Down-DC/DC-Wandlern 26 in der Infrastruktur an die zwischen 200 und 1000 V, in der Regel 800 V betragende Ladespannung eines zu ladenden Kraftfahrzeugs angepasst. Eine derart stabilisierte Ladespannung wird, gesteuert durch einen Schalter 22, von der Ladesäule 12 mit einer Ladeleistung von 150 kW an das Kraftfahrzeug geliefert.

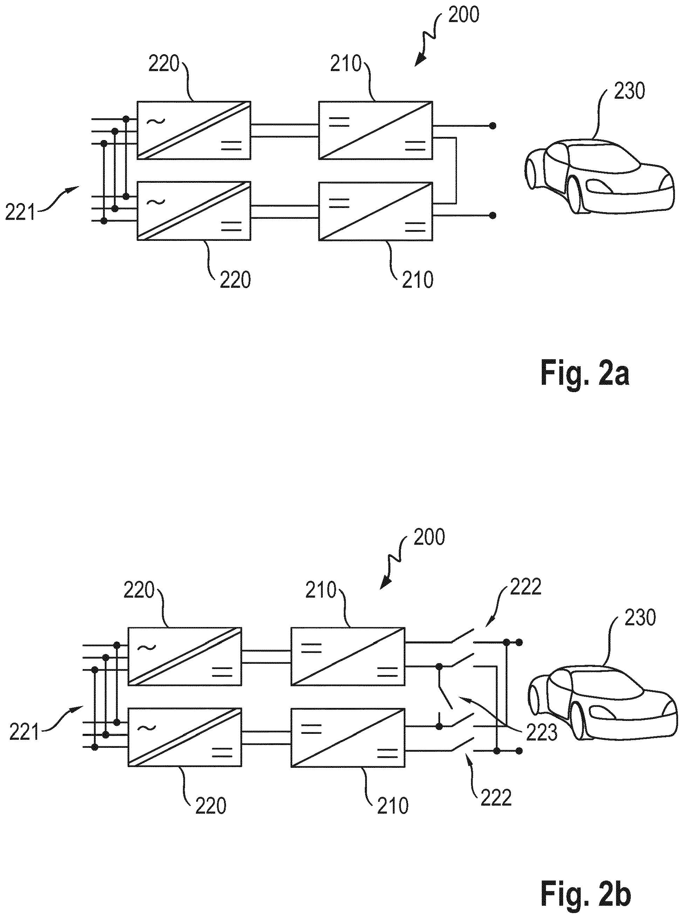

Figur 2 zeigt eine schematische Darstellung eines vereinfachten Aufbaus einer Ladestation mit einem Ladepunkt zum Laden eines elektrisch betriebenen Fahrzeugs. Gezeigt sind zwei Module, die hier fest miteinander verdrahtet sind. Jedes Modul umfasst einen AC/DC-Wandler 220 und einen dazu in Serie geschalteten DC/DC-Wandler 210 mit einem Ausgangs-Klemmenpaar. Jeder der AC/DC-Wandler 220 ist an seinem jeweiligen AC-Eingang 221 mit einem hier nicht gezeigten Transformator und darüber mit einer ebenfalls hier nicht gezeigten Ladedose bzw. Ladequelle verbindbar. Je nach Anforderung ist der jeweilige AC-Eingang 221 der jeweiligen Module mit einer Ladedose für ein- bis dreiphasigen Wechselstrom verbunden. Die jeweiligen AC/DC-Wandler 220 der jeweiligen Module weisen hier, wie durch doppelte Linien in den die AC/DC-Wandler darstellenden Blöcken symbolisiert, eine galvanische Trennung auf. Das heißt, dass die notwendige galvanische Trennung hier in der Leistungselektronik und nicht in dem hier nicht dargestellten Transformator vorgesehen ist.

In Figur 2a sind die Module über jeweils eine ihrer Klemmen fest miteinander verdrahtet. Die verbleibenden zwei Klemmen der beiden Module bilden zusammen den DC-Ausgang, an dem ein aufzuladendes Fahrzeug 230 angeschlossen werden kann.

In Figur 2b weisen die Module an ihrem jeweiligen Klemmenpaar jeweils zwei Schaltelemente 222 bzw. Schütze. Ferner ist an einer Verbindung zwischen den Modulen ein weiteres Schaltelement 223 vorgesehen. Insgesamt sind in der Leistungselektronik mit zwei Modulen fünf Schaltelemente vorgesehen. Werden Schaltelement 223 und die beiden äußeren Schaltelemente 222 der jeweiligen Klemmenpaare der Module geschlossen, so liegt der Schaltzustand der fest miteinander verdrahteten Module aus Figur 2a vor. Dabei sind die Module in Serie, d.h. seriell zueinander geschaltet. Durch Vorsehen der Schaltelemente 222 und 223 ist es nunmehr auch möglich, die Verschaltung der Module flexibel zu gestalten und je nach Anforderung wahlweise dynamisch zu ändern, d.h. zu rekonfigurieren. Schließt man alle Schaltelemente 222 und lässt Schaltelement 223 offen, so sind die Module parallel zueinander geschaltet.

Gegenüber Figur 1 wird durch das Vorsehen von Modulen in der Leistungselektronik, eine Ausgangsleistung der Leistungselektronik zerlegt, wodurch die Bauelemente der einzelnen Module geringere Leistungsanforderungen erfüllen müssen und demnach kostengünstiger ausgeführt werden können. Dazu liegen, wie hier in Figur 2 gezeigt, mindestens zwei Module mit jeweils mindestens einem Klemmenpaar mit DC-Ausgang und an und/oder zwischen den DC-Ausgängen der mindestens zwei Module derart angeordnete Schaltelemente vor, dass eine elektrische Schaltungskonfiguration zwischen den mindestens zwei Modulen durch geeignete Schaltzustände der Schaltelemente mindestens eine serielle und eine parallele Schaltungskonfiguration einnehmen können.

Mindestens eines der Module ist vorteilhafterweise innerhalb eines bestimmten Spannungs- und/oder Strombereichs steuer- und/oder regelbar, um den DC-Ausgang einstellbar zu gestalten. Optional können auch alle Module einstellbare DC-Ausgänge haben.

In Figur 2 ist die galvanische Trennung in den jeweiligen AC/DC-Wandlern 220 vorgesehen. Dadurch können günstige DC/DC-Wandler 210 eingesetzt werden. Allerdings kann prinzipiell auch in den DC/DC-Wandlern 210 die galvanische Trennung realisiert sein. Die AC/DC-Wandler 220 ermöglichen eine strom- und/oder spannungsgesteuerte Erzeugung einer Gleichspannung zur Speisung von Gleichspannungszwischenkreisen und zur Ladung entsprechend zugehöriger hier nicht dargestellter HV-Batterien.

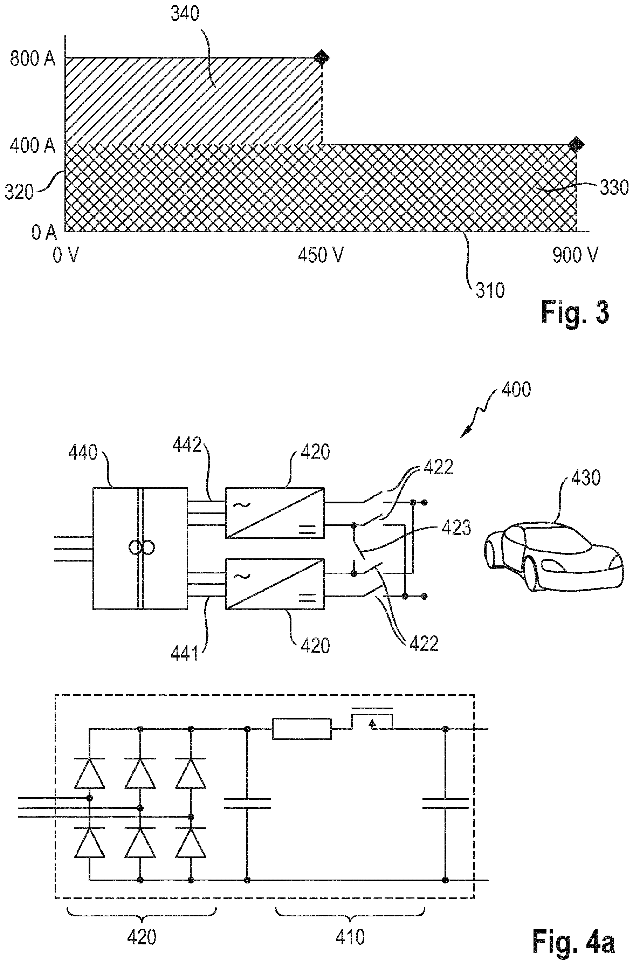

Figur 3 zeigt ein Diagramm, in welchem jeweilig erreichbare Arbeitsbereiche einer Leistungselektronik mit unterschiedlich zueinander verschalteten Modulen dargestellt sind. Auf einer Abszisse 310 ist dabei die Spannung in Volt [V] und auf einer Ordinate 320 der Strom in Ampere [A] dargestellt. Während sich bei einer fixen Serienverschaltung der Module, was auch durch ein entsprechend größeres Modul realisiert werden kann, der Arbeitsbereich über einen Bereich zwischen 0V und 950V, möglicherweise aber auch zwischen 0V und 1000V oder zwischen 0V und 1500V, zukünftig vielleicht auch zwischen 0V und > 1500V bis ca. 350A, 400A, 500A oder zukünftig eventuell 600A erstreckt, kann er bei einem parallelen Betrieb der zwei Module entsprechend erweitert werden, d.h. er erstreckt sich in einem Bereich zwischen bspw. 0V und 450V bspw. bis etwa 700A, 800A oder zukünftig ggf. bis etwa 1000A. Dadurch realisiert die modular und flexibel schaltbare Leistungselektronik quasi eine Art elektrisches Getriebe mit einer gestuften Strom-Spannungs-Umschaltung. Die hier genannten und in Figur 3 angegebenen Zahlenwerte sind rein beispielhaft und sollen nicht einschränkend sein.

Durch die erfindungsgemäße vorgesehene Zerlegung der Leistungselektronik in gleichartige Module bzw. Einzelmodule wird eine Reihe von Vorteilen erzielt. Es gelingt eine Anpassung an bislang inkompatible Spannungsbeziehungen. Verfügbare in einem jeweiligen Gleichspannungszwischenkreis vorzusehende Hochvoltbatterien haben keine ausreichende Kapazität, um eine zur Ladung von 800V-Fahrzeugen benötigte Leistung zur Verfügung zu stellen. Dazu ist eine Ladespannung von etwa 950 V erforderlich. Aufgrund der vom Ladestand der Batterie abhängigen Spannung und gewisser Varianz bei der Batteriekonfiguration kann dies einem Arbeitsbereich von 600 V bis 950 V, oder gar von 420 V bis 980 V entsprechen. Durch das Vorsehen einer Vielzahl von gleichartigen Modulen, die zu einer jeweiligen Leistungselektronik zusammenzuschalten sind, kann ein derartiger Arbeitsbereich realisiert werden. Ferner können bei der Produktion und im Einkauf erhebliche Kosten eingespart werden (Economy-of-Scales-Effekte). Durch die erfindungsgemäß ermöglichte Rekonfiguration der Verschaltung der einzelnen Module kann ein erhöhter Wirkungsgrad für einen Betrieb der einzelnen Module nahe deren jeweiligen Wirkungsgradmaxima erreicht werden. Durch die Anordnung der Schaltelemente können beim Einsatz von trennenden Schalterelementen auf weitere DC-Schütze zum zu ladenden Fahrzeug hin verzichtet werden.

Figur 4a zeigt eine schematische Darstellung eines Schaltplans einer Ausführungsform 400 der erfindungsgemäßen Leistungselektronik. Die hier dargestellte Leistungselektronik 400 umfasst zwei Module, die je mindestens einen Gleichrichter 420 aufweisen. Der jeweilige Gleichrichter 420 umfasst hier sechs Gleichrichterdioden wie im unteren Bereich von Figur 4a dargestellt ist. Optional kann einem jeweiligen Gleichrichter 420 ein im oberen Teil der Figur 4a nicht dargestellter DC/DC-Wandler 410 nachgeschaltet sein. Ein derartig nachgeschalteter DC/DC-Wandler 410 kann, wie im unteren Bereich von Figur 4a angedeutet, durch einen Tiefsetzsteller realisiert sein. Die im unteren Bereich von Figur 4a dargestellten Kapazitäten sind optional. Bei dem Gleichrichter 420 kann es sich um einen passiven Gleichrichter handeln. Der jeweilige Gleichrichter 420 kann über einen Y-Wickelsatz 442 oder über einen -Wickelsatz 441 mit einem Transformator 440 verbunden sein. Jeder der beiden Wickelsätze 442 und 441 ist dreiphasig. Die beiden Module der Leistungselektronik 400 sind über Schaltelemente 422, 423 so miteinander verschaltet, dass sie gemeinsam einen Ladepunkt für ein aufzuladendes Fahrzeug 430 bilden. In dem in Figur 4a gezeigten Beispiel ist der Transformator mit galvanischer Trennung ausgebildet. Dadurch muss in der Leistungselektronik selbst keine galvanische Trennung mehr vorgesehen werden, wodurch die für die Leistungselektronik zu verwendenden Bauteile kostengünstiger ausgebildet werden können. Alternativ dazu könnten jedoch auch der AC/DC-Wandler 420 oder auch der DC/DC-Wandler 410 mit einer galvanischen Trennung realisiert sein. Durch die Anordnung der Schaltelemente 422, 423 kann beim Einsatz von trennenden Schaltern auf weitere DC-Schütze zum Fahrzeug hin verzichtet werden.

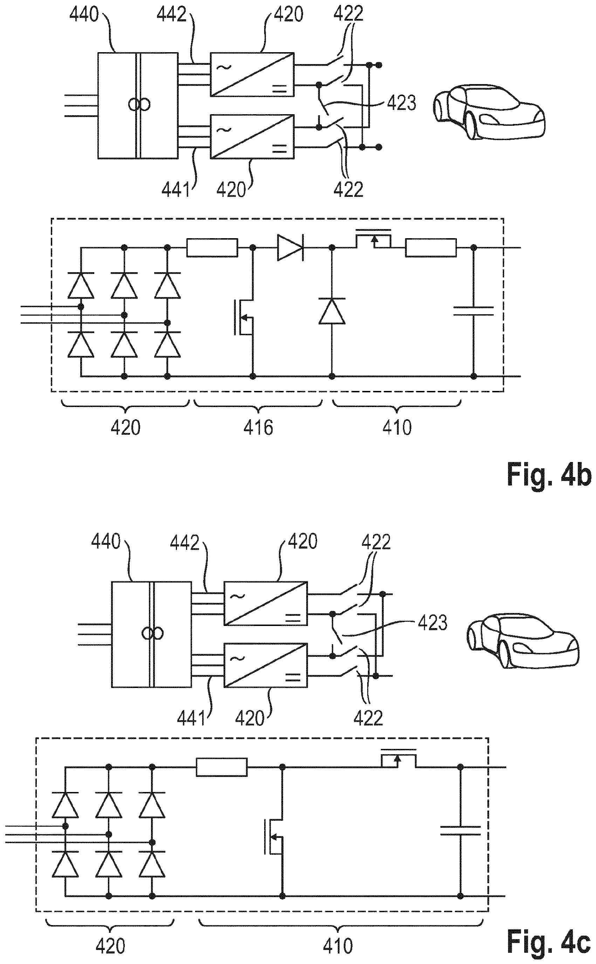

Figur 4b zeigt eine weitere schematische Darstellung eines Schaltplans einer Ausführungsform der erfindungsgemäßen Leistungselektronik. Die hier dargestellte Leistungselektronik umfasst wiederum zwei Module, die je mindestens einen Gleichrichter 420 aufweisen. Der jeweilige Gleichrichter 420 umfasst hier sechs Gleichrichterdioden wie im unteren Bereich von Figur 4b dargestellt ist. Optional kann einem jeweiligen Gleichrichter 420 ein im oberen Teil der Figur 4b nicht dargestellter DC/DC-Wandler 410 nachgeschaltet sein. Ein derartig nachgeschalteter DC/DC-Wandler 410 kann, wie im unteren Bereich von Figur 4b angedeutet, durch einen Tiefsetzsteller realisiert sein. Die von dem Tiefsetzsteller 410 umfasste Kapazität ist optional. Bei dem Gleichrichter 420 kann es sich um einen passiven Gleichrichter handeln. Zwischen dem passiven Gleichrichter 420 und dem Tiefsetzsteller 410 ist hier eine PFC-Stufe (engl.: Power-Factor-Correction) 416 geschaltet. Eine gegebenenfalls unsymmetrische und nicht sinusförmige Stromentnahme durch die Leistungselektronik kann zu negativen Auswirkungen auf das Stromversorgungsnetz führen. Ein hoher Oberwellenanteil im nicht sinusförmigen Strom sorgt für mehr Verlustleistung in entsprechenden Trafostationen, die von den Kraftwerken zusätzlich erzeugt werden muss. Ferner kompensieren sich jeweilige Strangströme des Dreiphasensystems kaum noch, was zu höheren Ausgleichsströmen führt. Eine Lösung gegen nicht sinusförmigen Strom ist die genannte Power-Factor-Correction (PFC) 416 oder Leistungsfaktorkorrektur. Die PFC Stufe 416 kann einen ungleichmäßigen Stromfluss über den Gleichrichter 420 verstetigen. Dadurch wird eine höhere Stromqualität gegenüber einem entsprechenden Netzanschluss ermöglicht. Der jeweilige Gleichrichter 420 kann über einen Y-Wickelsatz 442 oder über einen -Wickelsatz 441 mit einem Transformator 440 verbunden sein. Jeder der beiden Wickelsätze 442 und 441 ist dreiphasig. Die beiden Module der Leistungselektronik 400 sind über Schaltelemente 422, 423 so miteinander verschaltet, dass sie gemeinsam einen Ladepunkt für ein aufzuladendes Fahrzeug 430 bilden. In dem in Figur 4b gezeigten Beispiel ist der Transformator mit galvanischer Trennung ausgebildet. Dadurch muss in der Leistungselektronik selbst keine galvanische Trennung mehr vorgesehen werden, wodurch die für die Leistungselektronik zu verwendenden Bauteile kostengünstiger ausgebildet werden können. Alternativ dazu könnten jedoch auch der AC/DC-Wandler 420 oder auch der DC/DC-Wandler 410 mit einer galvanischen Trennung realisiert sein. Durch die Anordnung der Schaltelemente 422, 423 kann beim Einsatz von trennenden Schaltern auf weitere DC-Schütze zum Fahrzeug hin verzichtet werden.

Figur 4c zeigt eine schematische Darstellung eines Schaltplans einer weiteren Ausführungsform der erfindungsgemäßen Leistungselektronik. Die hier dargestellte Leistungselektronik umfasst wiederum zwei Module, die je mindestens einen Gleichrichter 420 aufweisen. Der jeweilige Gleichrichter 420 umfasst hier sechs Gleichrichterdioden wie im unteren Bereich von Figur 4c dargestellt ist. Optional kann einem jeweiligen Gleichrichter 420 ein im oberen Teil der Figur 4c nicht dargestellter DC/DC-Wandler 410 nachgeschaltet sein. Ein derartig nachgeschalteter DC/DC-Wandler 410 kann, wie im unteren Bereich von Figur 4c angedeutet, durch einen Hoch-/Tiefsetzsteller für gleichzeitige PFC realisiert sein. Die separate PFC Stufe ist hier als Aufwärtswandler (Hochsetzsteller) ausgeführt. Alternativ dazu kann sie ebenso in den Abwärtswandler (Tiefsetzsteller) gezogen werden. Die von dem DC/DC-Wandler 410 umfasste Kapazität ist optional. Bei dem Gleichrichter 420 kann es sich um einen passiven Gleichrichter handeln. Der jeweilige Gleichrichter 420 kann über einen Y-Wickelsatz 442 oder über einen -Wickelsatz 441 mit einem Transformator 440 verbunden sein. Jeder der beiden Wickelsätze 442 und 441 ist dreiphasig. Die beiden Module der Leistungselektronik 400 sind über Schaltelemente 422, 423 so miteinander verschaltet, dass sie gemeinsam einen Ladepunkt für ein aufzuladendes Fahrzeug 430 bilden. In dem in Figur 4c gezeigten Beispiel ist der Transformator 440 mit galvanischer Trennung ausgebildet. Dadurch muss in der Leistungselektronik selbst keine galvanische Trennung mehr vorgesehen werden, wodurch die für die Leistungselektronik zu verwendenden Bauteile kostengünstiger ausgebildet werden können. Alternativ dazu könnten jedoch auch der AC/DC-Wandler 420 oder auch der DC/DC-Wandler 410 mit einer galvanischen Trennung realisiert sein. Durch die Anordnung der Schaltelemente 422, 423 kann beim Einsatz von trennenden Schaltern auf weitere DC-Schütze zum Fahrzeug hin verzichtet werden.

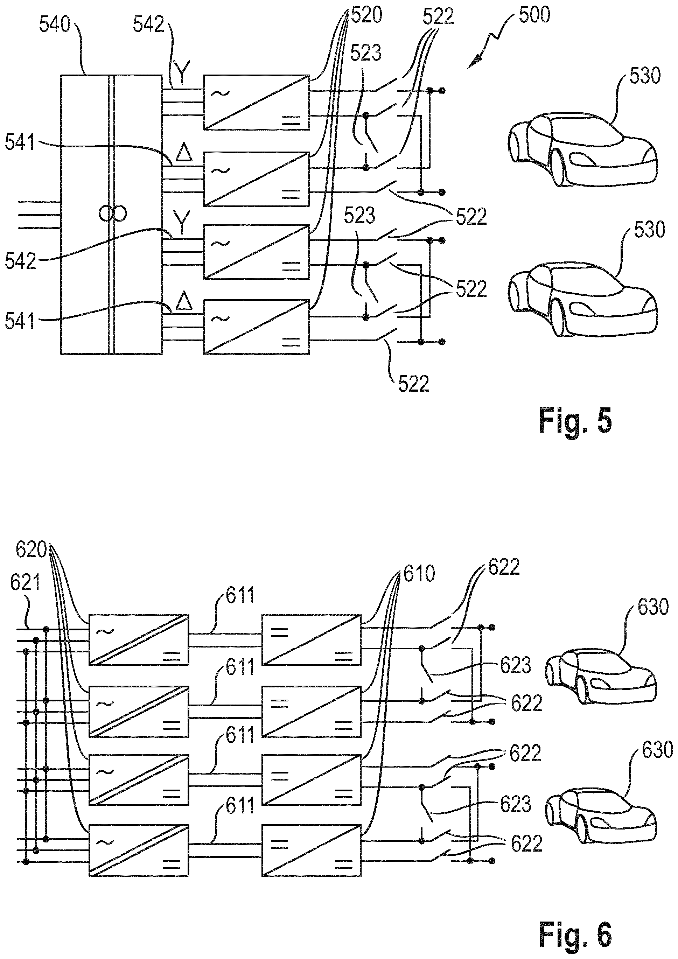

Figur 5 zeigt eine Implementierung einer Ausführungsform der erfindungsgemäßen Leistungselektronik mit mehr als einem Ladepunkt, hier mit zwei Ladepunkten. Hier wird entsprechend der von der Firma Porsche entwickelten Split-Powerline-Technologie ein Transformator 540 mit der Ausführungsform 500 der erfindungsgemäßen Leistungselektronik gekoppelt. Der Transformator 540 wird über eine Vielzahl von Unterspannungsabgriffen und jeweils dreiphasigen, aber unterschiedlichen Wicklungen 542 bzw. 541 mit je einem Gleichrichter 520 eines jeweiligen Moduls der Leistungselektronik verbunden. Bei den Wicklungen kann es sich um Y-Wicklungen 542 oder um -Wicklungen 541 handeln. Im hier gezeigten Fall, d.h. gemäß dem Prinzip der Split-Powerline-Technologie, ist die Leistungselektronik 500 nicht galvanisch getrennt, jedoch der vorgeschaltete Transformator 540. Jedes Modul der Leistungselektronik 500 umfasst mindestens einen Gleichrichter 520. Der Gleichrichter 520 kann um einen hier nicht dargestellten DC/DC-Wandler ergänzt werden. Die hier gezeigte Leistungselektronik 500 umfasst vier einzelne Module, die über insgesamt zehn Schaltelemente 522, 523 untereinander bzw. miteinander verschaltet sind und zusammen insgesamt zwei Ladepunkte für entsprechend zwei zu ladende Fahrzeuge 530 bilden.

Figur 6 zeigt eine Implementierung einer weiteren Ausführungsform der erfindungsgemäßen Leistungselektronik mit mehr als einem Ladepunkt, hier mit zwei Ladepunkten. Die Leistungselektronik umfasst hier vier Module. Jedes der vier Module umfasst einen Gleichrichter 620, einem Gleichspannungszwischenkreis 611 und einen dazu in Reihe bzw. in Serie geschalteten DC/DC-Wandler 610. Der Gleichspannungszwischenkreis koppelt als Energiespeicher mehrere elektrische Netze auf einer zwischengeschalteten Spannungsebene. Die vier Module haben einen gemeinsamen dreiphasig ausgebildeten AC-Anschluss 621. Zwischen dem gemeinsamen AC-Anschluss 621 und den an den zwei Ladepunkten anzuschließenden Fahrzeugen 630 muss eine galvanische Trennung stattfinden, die hier in den jeweiligen Gleichrichtern 620 der einzelnen Modulen realisiert ist, was durch jeweilige doppelte Linien in den jeweiligen die jeweiligen Gleichrichter 620 symbolisierenden Blöcken angedeutet ist. Die notwendige galvanische Trennung könnte auch in den jeweiligen DC/DC-Wandlern 610 realisiert werden, wobei letztere bevorzugt sind, da hier eine galvanische Trennung einfacher zu realisieren ist.

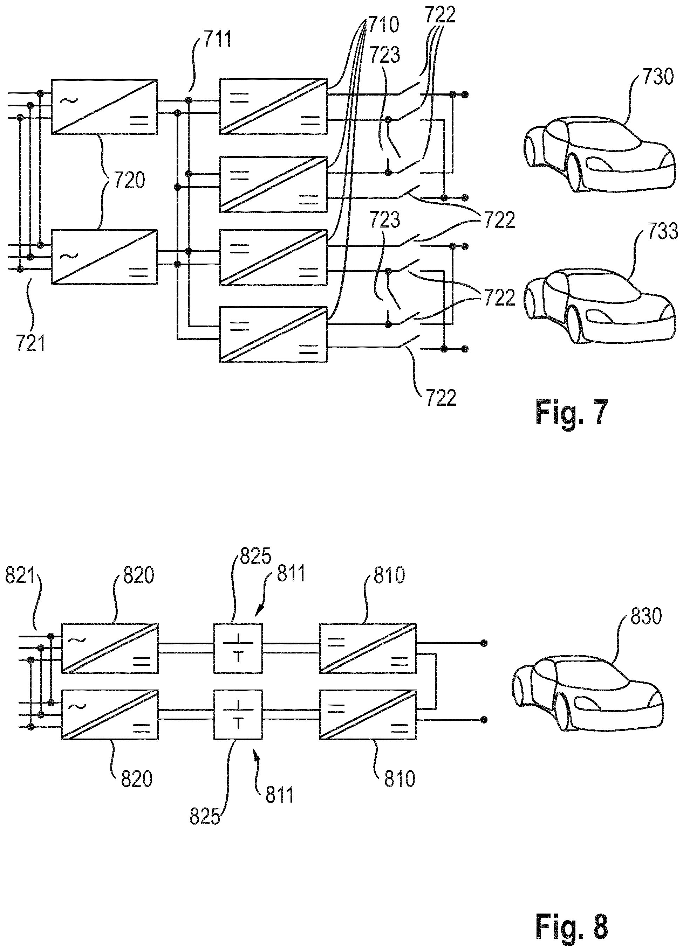

Figur 7 zeigt eine Implementierung einer noch weiteren Ausführungsform der erfindungsgemäßen Leistungselektronik mit mehr als einem Ladepunkt, nämlich mit hier zwei Ladepunkten, um entsprechend zwei Kraftfahrzeuge 730 laden zu können. Jedes der vier Module umfasst einen DC/DC-Wandler 710. Die vier Module haben einen gemeinsamen DC/DC-Zwischenkreis 711. Der DC/DC-Zwischenkreis 711 wird hier von zwei Gleichrichtern 720 gespeist. Prinzipiell könnte der DC/DC-Zwischenkreis 711 von einem oder mehreren Gleichrichtern 720 gespeist werden. Es muss eine galvanische Trennung zwischen dem DC/DC-Zwischenkreis 711 und den zu ladenden Fahrzeugen 730 realisiert werden, was im hier gezeigten Beispiel durch eine galvanische Trennung in den jeweiligen DC/DC-Wandlern 710 erfolgt, wie durch eine jeweilige doppelte Linie in den jeweiligen die DC/DC-Wandler darstellenden Blöcken angedeutet. Die vier Module haben einen gemeinsamen dreiphasig ausgebildeten AC-Anschluss 721. Die Module sind über Schaltelemente 722, 723 an ihren jeweiligen DC-Ausgängen flexibel und dynamisch rekonfigurierbar untereinander verschaltbar.

Figur 8 zeigt in schematischer Darstellung eine Leistungselektronik. Die hier dargestellte Leistungselektronik weist einen Ladepunkt auf, an dem ein Fahrzeug 830 geladen werden kann. In der Regel verfügt das zu ladende Fahrzeug 830 über ein DC-Ladekabel, das am Ende mit einem Stecker versehen ist und darüber an ein durch die Module gebildetes Ausgangsklemmenpaar der Leistungselektronik angeschlossen werden kann. Der Ladepunkt umfasst eine Mehrzahl, hier zwei gleichartige Module, deren Ausgangsklemmenpaare wiederum in elektrischer serieller Verschaltung das DC-Ladekabel für das Fahrzeug 830 speisen. Eine flexible Verschaltung wird erfindungsgemäß (im Gegensatz zu der hier dargestellten festen Verschaltung) durch das Vorsehen von einer Mehrzahl von Schaltelementen zwischen den jeweiligen Ausgangsklemmenpaaren der jeweiligen Module und/oder zwischen den jeweiligen Ausgangsklemmenpaaren der jeweiligen Module und dem Ladepunkt realisiert. Jedes Modul umfasst hier einen AC/DC-Wandler 820, der Wechsel- oder Drehstromenergie in eine Gleichspannung umwandelt und dabei eine galvanische Trennung zwischen dem AC-Eingang und dem DC-Ausgang der Leistungselektronik herstellt. Die Gleichspannungserzeugung ist strom- und/oder spannungsgesteuert. Vorzugsweise ist sie sowohl strom- als auch spannungsgesteuert. Dabei ist jeweils der niedrigere Grenzwert aktiv, bspw. in einer kaskadierten Regelung mit einem inneren Spannungs- und einem äußeren Stromregler. Ferner umfasst hier jedes Modul einen Gleichspannungszwischenkreis 811, d.h. einen DC-Zwischenkreis, der von dem mindestens einen AC/DC-Wandler 820 gespeist wird. Ferner umfasst hier jedes Modul einen Hochvoltspeicher 825, der so mit dem Gleichspannungszwischenkreis 811 elektrisch verbunden ist, dass der Hochvoltspeicher 825 Energie an den Gleichspannungszwischenkreis 811 abgeben und/oder von diesem Energie aufnehmen kann. Ferner umfasst jedes Modul einen DC/DC-Wandler 810, der Energie von dem Gleichspannungszwischenkreis 811 aufnehmen und diese an mindestens ein Ausgangsklemmenpaar abgeben kann. Vorzugsweise handelt es sich bei dem DC/DC-Wandler 810 um einen Abwärtswandler, so dass die durch den DC/DC-Wandler 810 erzeugte Spannung an dem Ausgangsklemmenpaar des Moduls geringer ist als die Spannung des Gleichspannungszwischenkreises 811. Aufgrund der galvanischen Trennung in den jeweiligen AC/DC-Wandlern 820 können Eingänge vom selben Energieversorgungsnetz versorgt werden.

Für eine Trennbarkeit des Fahrzeuges von einem Ladepunkt kann mindestens eine der Ladeleitungen Schütze und/oder Sicherungen umfassen. Vorzugsweise sind die Schütze außer im Lademodus, sofern ein gewünschter Ladestrom ungleich Null fließt, geöffnet. Die Schütze werden ferner geöffnet.

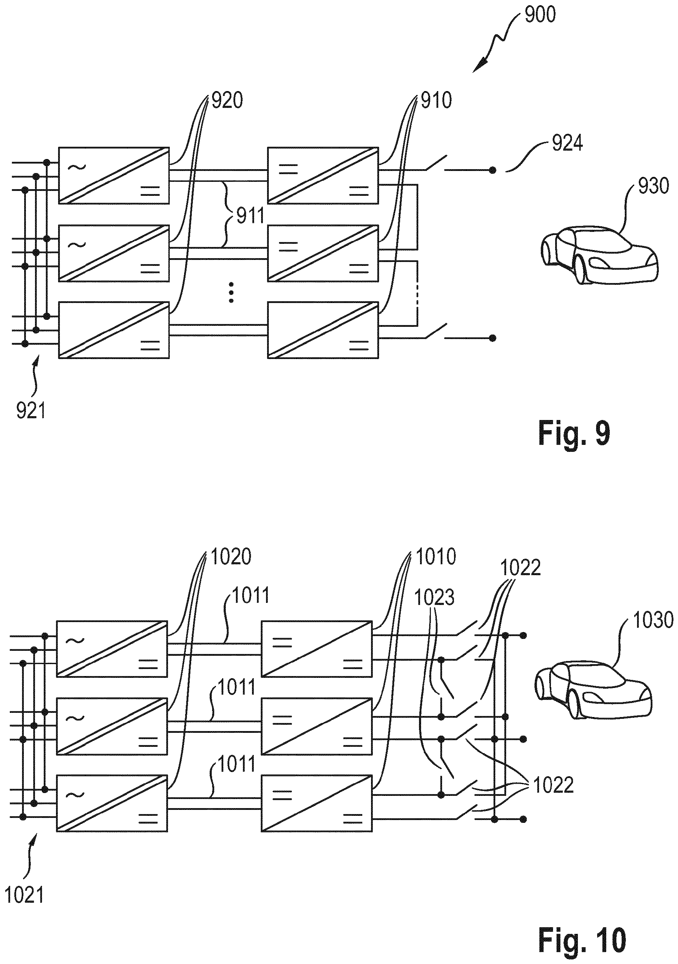

Figur 9 zeigt in schematischer Darstellung eine Leistungselektronik mit N Modulen. Die Leistungselektronik 900 weist einen Ladepunkt, d.h. ein Ausgangsklemmenpaar 924 auf, an dem ein Fahrzeug 930 geladen werden kann. Die Leistungselektronik umfasst N gleichartige Module, wie durch drei untereinander stehende Punkte angedeutet. Jedes Modul umfasst einen DC/DC-Wandler 910 und einen dazu in Reihe geschalteten AC/DC-Wandler 920 Dazwischen befindet sich jeweils ein Gleichspannungszwischenkreis 911. Die notwendige galvanische Trennung zwischen dem AC-Eingang und dem Ladepunkt wird in den jeweiligen AC/DC-Wandlern 920 realisiert, wie durch eine jeweilige doppelte Linie in den jeweiligen Blöcken der AC/DC-Wandler 920 symbolisiert. Die N Module weisen einen gemeinsamen ein- oder mehrphasigen AC-Eingang 921 auf. Die N-Module sind an ihren jeweiligen Ausgangsklemmenpaaren fest miteinander verschaltet. Zum Ladepunkt hin, sind an den Ladeleitungen Sicherheitsschalter vorgesehen.

Figur 10 zeigt in schematischer Darstellung eine Ausführungsform der erfindungsgemäßen Leistungselektronik mit drei Modulen. Jedes Modul umfasst einen DC/DC-Wandler 1010 und einen dazu in Reihe geschalteten AC/DC-Wandler 1020. Dazwischen ist ein jeweiliger Gleichspannungszwischenkreis 1011 vorgesehen. Die notwendige galvanische Trennung zwischen dem AC-Eingang und dem Ladepunkt wird in den jeweiligen AC/DC-Wandlern 1020 realisiert, wie durch eine jeweilige doppelte Linie in den jeweiligen Blöcken der AC/DC-Wandler 1020 symbolisiert. Die drei Module weisen einen gemeinsamen ein- oder mehrphasigen AC-Eingang 1021 auf. Durch zwischen jeweiligen Ausgangsklemmen der jeweiligen Module und dem Ladepunkt vorgesehene Schaltelemente 1022, 2023, über welche die Module untereinander verschaltet werden können, ist eine flexible Verschaltung der Module, d.h. seriell, parallel oder gemischt seriell/parallel realisierbar. Dadurch kann der Arbeitsbereich der Leistungselektronik dynamisch umgeschaltet werden, wodurch an dem durch die Leistungselektronik bereitgestellten Ladepunkt Fahrzeuge mit unterschiedlicher Ladetechnik geladen werden können.

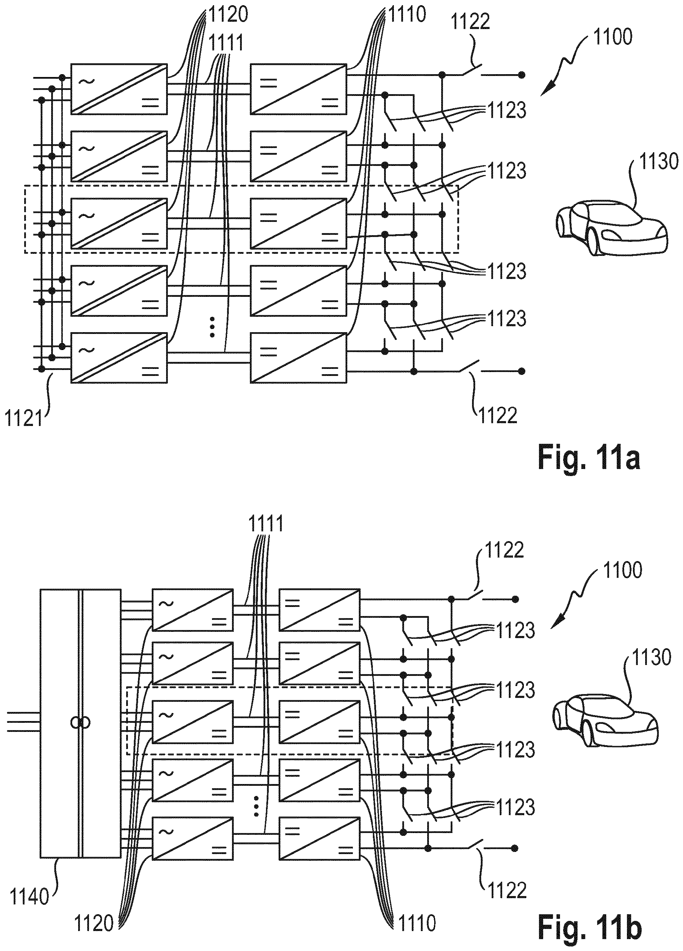

Figur 11a zeigt in schematischer Darstellung eine weitere Ausführungsform der erfindungsgemäßen Leistungselektronik. Die hier darstellte Leistungselektronik 1100 umfasst einen Ladepunkt zum Laden eines Fahrzeugs 1130 und N (wie durch drei untereinander stehende Punkte angedeutet) gleichartige Module, die jeweils einen AC/DC-Gleichrichter 1120 mit galvanischer Trennung, einen DC-Zwischenkreis 1111 und einen DC/DC-Wandler 1110 umfassen. Durch gestrichelte Linien ist ein Modul als replizierbarer Block dargestellt. Die Module haben einen gemeinsamen ein- oder mehrphasigen AC-Anschluss bzw. einen gemeinsamen ein- oder mehrphasigen AC-Bus 1121. Durch die ferner vorgesehenen Schaltelemente 1122, 1123 an den jeweiligen Ausgangsklemmenpaaren der einzelnen Module, können die Module untereinander flexibel verschaltet werden und dynamisch eine gemischt seriell-parallel-Konfiguration ermöglichen. An dem gemeinsamen Ausgangsklemmenpaar der Module, d.h. letztlich an dem Klemmenpaar, an dem das Fahrzeug anzuschließen ist, d. h. dem Ladepunkt, können Ausgangsschütze 1122 vorgesehen sein. Diese sind optional, aus Sicherheitsgründen aber die Regel. Allgemein könnte jedes Modul auch nur aus einem Gleichrichter 1120 bestehen. Bei reiner Abwärtswandlung der Spannung in jedem Gleichrichter, kann ein einfacher aktiver Gleichrichter eingesetzt werden.

Figur 11b zeigt in schematischer Darstellung eine weitere Ausführungsform der erfindungsgemäßen Leistungselektronik, die im Wesentlichen eine zu der in Figur 11a gezeigten Ausführungsform alternative Ausführungsform darstellt. Anstelle einer jeweiligen galvanischen Trennung in den AC/DC-Wandlern findet hier die galvanische Trennung außerhalb der Leistungselektronik statt, nämlich in einem Transformator 1140, der den AC/DC-Wandlern 1120 vorgeschaltet ist. Der Transformator 1140 kann dabei mit mehreren sekundärseitigen Windungssätzen ausgeführt sein. Dadurch, dass die galvanische Trennung ausschließlich im Transformator 1140 vorgesehen ist, können für die Leistungselektronikbauelemente preisgünstige und effiziente galvanisch nicht trennende Schaltungen eingesetzt werden.

Alternativ kann anstelle einer hier in den jeweiligen Modulen vorgesehenen Kombination von Gleichrichter (AC/DC-Wandler), Gleichspannungszwischenkreis und DC/DC-Wandler auch ein Gleichrichter mit stellbarer DC-Ausgangsspannung eingesetzt werden. Wenn dabei die Ausgangsspannung ausreichend niedrig gegenüber der Eingangsspannung des Gleichrichters gewählt wird, muss dieser die Spannung lediglich abwärtswandeln, wodurch sehr einfache aktive spannungsgeführte Gleichrichterschaltungen und sogar stromgeführte Phasenanschnittschaltungen verwendet werden können. Phasenanschnittschaltungen sind bspw. aus Dimmern, Lokomotiven und HGÜ-Konvertern bekannt und verwenden kostengünstige Thyristoren oder Triacs. Wird ein entsprechender aktiv steuerbarer AC/DC-Wandler eingesetzt, kann dieser die Wechselspannung direkt abwärtswandeln. Als typische Schaltung kann eine Mehrphasenbrückenschaltung aus Halbleiterschaltern, bspw. IGBT, FET, diversen Transistoren (für spannungsgeführte Schaltungen) oder Thyristoren (für stromgeführte Schaltungen) eingesetzt werden.

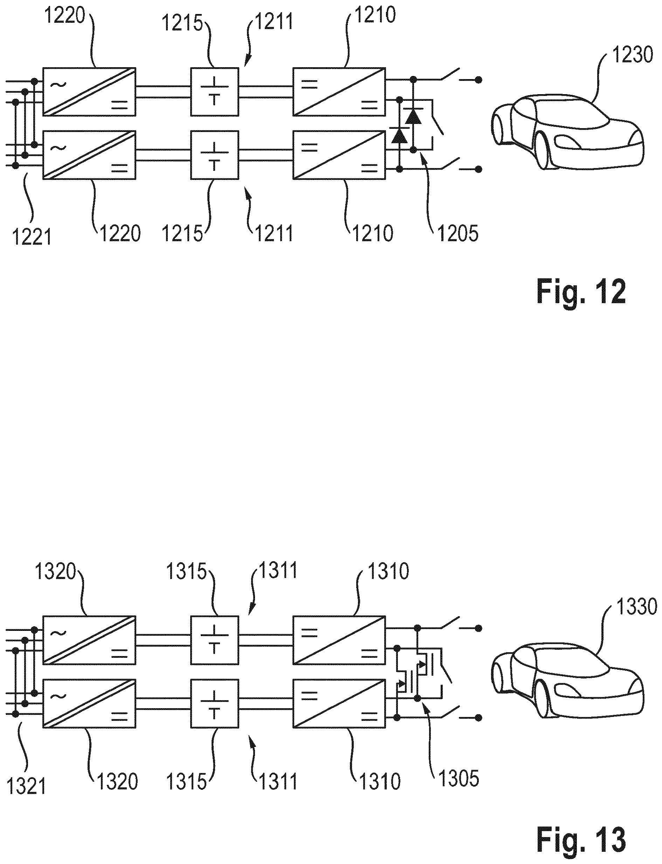

Figur 12 zeigt eine schematische Darstellung einer weiteren Ausführungsform der erfindungsgemäßen Leistungselektronik. Die Leistungselektronik umfasst zwei Module, die jeweils einen Gleichrichter 1220, einen DC/DC-Wandler 1210, und einen DC-Zwischenkreis 1211 mit Hochvoltspeicher 1215 umfassen. Die zwei Module haben einen gemeinsamen ein- oder mehrphasigen AC-Anschluss 1221. Die zwischen Fahrzeug 1230 bzw. zwischen Ladepunkt, an dem das Fahrzeug 1230 zu laden ist, und den DC/DC-Wandlern 1210 vorgesehenen Schaltelemente, die eine flexible Verschaltung der Module untereinander erlauben, sind hier zumindest zum Teil, d.h. hier konkret zwei von fünf der Schaltelemente als Halbleiterschalter 1205 ausgebildet. Im hier gezeigten Beispiel sind zwei der Schaltelemente durch passive Dioden 1205 realisiert. Vorteilhaft dabei ist, dass die Halbleiterschalter 1205 hinsichtlich ihrer Sperrspannung lediglich auf eine maximale Ausgangsspannung eines der DC/DC-Wandler 1210 ausgelegt werden müssen.

Figur 13 zeigt in schematischer Darstellung eine zu der in Figur 12 gezeigten Ausführungsform alternative Ausführungsform der erfindungsgemäßen Leistungselektronik. Die Leistungselektronik umfasst zwei Module, die jeweils einen Gleichrichter 1320, einen DC/DC-Wandler 1310 und einen dazwischen geschalteten DC-Zwischenkreis 1311 mit Hochvoltspeicher 1315 umfassen. Die zwei Module haben einen gemeinsamen ein- oder mehrphasigen AC-Anschluss 1321. Gegenüber Figur 12 ist hier zumindest eine der Dioden, hier beide Dioden, durch jeweils einen aktiven Halbleiter 1305 ersetzt. Dabei kann es sich bspw. um Thyristoren oder IGBT bei hohen Spannungen oder Feldeffekttranistoren (FET) bei niedrigen Spannungen handeln. Insbesondere unipolare, majoritätsträgerbasierte Halbleiterschalter, bspw. FET, bieten den Vorteil deutlich geringerer Leistungsverluste im Vergleich zu passiven Dioden.

## Patentansprüche

1. Leistungselektronik zum Laden mindestens eines elektrisch betriebenen Fahrzeugs (230, 430, 530, 630, 730, 1030, 1130, 1230, 1330), wobei die Leistungselektronik mindestens drei Module mit jeweils mindestens einem Klemmenpaar mit DC-Ausgang, mindestens einen Gleichrichter (220, 420, 520, 620, 720, 1020, 1120, 1220, 1320), mindestens einen AC-Eingang (221, 621, 721, 1021, 1121, 1221, 1321), mindestens einen Gleichspannungszwischenkreis (711, 1011, 1111, 1211, 1311) und eine Anzahl von Schaltelementen (222, 223; 422, 423; 522, 523; 622,623; 722, 723; 1022, 1023; 1122, 1123; 1222, 1223; 1322, 1323) aufweist, bei der die jeweiligen DC-Ausgänge der mindestens drei Module über die Schaltelemente (222, 223; 422, 423; 522, 523; 622, 623; 722, 723; 1022, 1023; 1122, 1123; 1222, 1223; 1322, 1323) unter Bildung mindestens eines Ladepunkts zum Laden des mindestens einen elektrisch betriebenen Fahrzeugs (230, 430, 530, 630, 730, 1030, 1130, 1230, 1330) wahlweise verbindbar sind, wobei die Schaltelemente (222, 223; 422, 423; 522, 523; 622, 623; 722, 723; 1022, 1023; 1122, 1123; 1222, 1223; 1322, 1323) derart an und/oder zwischen den DC-Ausgängen der mindestens drei Module angeordnet sind, dass zwischen den mindestens drei Modulen durch geeignete Schaltzustände der Schaltelemente (222, 223; 422, 423; 522, 523; 622, 623; 722, 723; 1022, 1023; 1122, 1123; 1222, 1223; 1322, 1323) mindestens eine serielle und eine parallele Schaltungskonfiguration dynamisch einstellbar ist, und dadurch der Arbeitsbereich der Leistungselektronik dynamisch umschaltbar ist, wobei die Leistungselektronik dazu ausgelegt ist, je nach Anforderung bei näherungsweise konstanter Ausgangsleistung entweder eine Spitzenspannung bei Nennstrom oder eine verminderte Spannung bei entsprechend erhöhtem Strom durch eine entsprechende Schaltung der Schaltelemente (222, 223; 422, 423; 522, 523; 622, 623; 722, 723; 1022, 1023; 1122, 1123; 1222, 1223; 1322, 1323) bereitzustellen, **dadurch gekennzeichnet, dass** mindestens eine gemischt serielle/parallele Schaltungskonfiguration dynamisch einstellbar ist, und dadurch der Arbeitsbereich der Leistungselektronik dynamisch an einen des mindestens einen Ladepunkts umschaltbar ist, wobei im Falle eines Defekts eines der mindestens drei Module, durch eine spezifische Einstellung der Schaltzustände der jeweiligen Schaltelemente (222, 223; 422, 423; 522, 523; 622, 623; 722, 723; 1022, 1023; 1122, 1123; 1222, 1223; 1322, 1323), das defekte Modul isoliert wird bzw. Ladestrom an dem defekten Modul vorbei geleitet wird.

2. Leistungselektronik nach Anspruch 1, die ferner mindestens einen Hochvoltspeicher (1215, 1315) umfasst.

3. Leistungselektronik nach Anspruch 1 oder 2, bei der die Schaltungselemente (222, 223; 422, 423; 522, 523; 622, 623; 722, 723; 1022, 1023; 1122, 1123; 1222, 1223; 1322, 1323) an und/oder zwischen den jeweiligen Klemmenpaaren der mindestens drei Module angeordnet sind.

4. Leistungselektronik nach einem der voranstehenden Ansprüche, bei der mindestens ein Modul der mindestens drei Module innerhalb eines bestimmten Spannungs- und/oder Strombereichs steuer- und/oder regelbar ist.

5. Leistungselektronik nach einem der voranstehenden Ansprüche, bei der jedes der mindestens drei Module einen Gleichrichter (220, 420, 520, 620, 1020, 1120, 1220, 1320) umfasst.

6. Leistungselektronik nach Anspruch 5, bei der mindestens ein Modul mindestens einen mit dem Gleichrichter (220, 420, 520, 620, 720, 1020, 1120, 1220, 1320) in Reihe geschalteten DC/DC-Wandler (210, 410, 610, 710, 1010, 110, 1210, 1310) umfasst.

7. Leistungselektronik nach einem der Ansprüche 1 bis 4, bei der jedes der mindestens drei Module einen DC/DC-Wandler (710) umfasst, wobei die DC/DC-Wandler (710) der mindestens drei Module von mindestens einem gemeinsamen Gleichrichter (720) gespeist werden.

8. Leistungselektronik nach einem der voranstehenden Ansprüche, bei der der jeweilige mindestens eine Gleichrichter (220, 620, 720, 1020, 1220, 1320) galvanisch trennend ist.

9. Leistungselektronik nach einem der Ansprüche 1 bis 7, die keine galvanische Trennung aufweist und dazu ausgelegt ist, dass die Module jeweils über den mindestens einen AC-Anschluss mit einem galvanisch trennenden Transformator (440, 540, 1140) verbindbar sind.

10. Leistungselektronik nach Anspruch 6 oder 7, bei der der jeweilige mindestens eine DC/DC-Wandler des mindestens einen Moduls galvanisch trennend ist.

11. Leistungselektronik nach Anspruch 9, die dazu ausgelegt ist, den Transformator (440, 540, 1140) über jeweilige Unterspannungsabgriffe mit dem jeweiligen AC-Anschluss der jeweiligen Module zu verbinden.

12. Leistungselektronik nach einem der voranstehenden Ansprüche, die mehr als zwei Module aufweist, wobei die Module untereinander seriell, parallel oder gemischt seriell und parallel rekonfigurierbar verschaltbar sind.

13. Leistungselektronik nach einem der voranstehenden Ansprüche, bei der zumindest ein Teil der Schaltelemente dazu ausgelegt ist, eine Rekonfiguration der Leistungselektronik durch eine Änderung der Verschaltung der Schaltelemente (222, 223; 422, 423; 522, 523; 622, 623; 722, 723; 1022, 1023; 1122, 1123; 1222, 1223; 1322, 1323) untereinander während eines Betriebes der Schaltelektronik unterbrechungsfrei zu ermöglichen.

14. Leistungselektronik nach Anspruch 13, bei der der zumindest eine Teil der Schaltelemente (222, 223; 422, 423; 522, 523; 622, 623; 722, 723; 1022, 1023; 1122, 1123; 1222, 1223; 1322, 1323) abschaltbare Schaltelemente, insbesondere abschaltbare Halbleiterschalter, insbesondere IGBT oder FET umfasst.

15. Leistungselektronik nach einem der Ansprüche 1 bis 12, bei der eine Rekonfiguration der Leistungselektronik durch eine Änderung der Verschaltung der Schaltelemente (222, 223; 422, 423; 522, 523; 622, 623; 722, 723; 1022, 1023; 1122, 1123; 1222, 1223; 1322, 1323) untereinander leistungslos realisierbar ist.

16. Leistungselektronik nach einem der Ansprüche 5 bis 15, bei der die Gleichrichter (220, 420, 520, 620, 1020, 1120, 1220, 1320) der jeweiligen Module zueinander versetzte Wicklungen umfassen, so dass auftretende Störungen der jeweiligen Module orthogonal zueinander sind.

17. Leistungselektronik nach einem der voranstehenden Ansprüche, die mindestens ein Redundanzmodul umfasst, das im Falle eines Ausfalls eines der mindestens zwei Module durch eine geeignete Änderung der Schaltzustände der jeweiligen Schaltelemente (222, 223; 422, 423; 522, 523; 622, 623; 722, 723; 1022, 1023; 1122, 1123; 1222, 1223; 1322, 1323) das defekte Modul funktionsgerecht ersetzt.

18. Leistungselektronik nach einem der voranstehenden Ansprüche, bei der jeweilige Taktungen der einzelnen Module entweder asynchron oder gezielt gegeneinander versetzt sind.

19. Verfahren zum Laden mindestens eines elektrisch betriebenen Fahrzeugs (230, 430, 530, 630, 730, 1030, 1130, 1230, 1330), bei dem eine Leistungselektronik nach einem der voranstehenden Ansprüche verwendet wird.

20. Verfahren nach Anspruch 19 bei dem die Leistungselektronik über einen dazwischengeschalteten mit galvanischer Trennung ausgestatteten Transformator mit einer Mittelspannung gespeist wird.

## Claims

1. Power electronics system for charging at least one electrically operated vehicle (230, 430, 530, 630, 730, 1030, 1130, 1230, 1330), wherein the power electronics system has at least three modules each having at least one terminal pair with DC output, at least one rectifier (220, 420, 520, 620, 720, 1020, 1120, 1220, 1320), at least one AC input (221, 621, 721, 1021, 1121, 1221, 1321), at least one DC link (711, 1011, 1111, 1211, 1311) and a number of switching elements (222, 223; 422, 423; 522, 523; 622, 623; 722, 723; 1022, 1023; 1122, 1123; 1222, 1223; 1322, 1323), in which the respective DC outputs of the at least three modules can be connected selectively by means of the switching elements (222, 223; 422, 423; 522, 523; 622, 623; 722, 723; 1022, 1023; 1122, 1123; 1222, 1223; 1322, 1323) so as to form at least one charging point for charging the at least one electrically operated vehicle (230, 430, 530, 630, 730, 1030, 1130, 1230, 1330), wherein the switching elements (222, 223; 422, 423; 522, 523; 622, 623; 722, 723; 1022, 1023; 1122, 1123; 1222, 1223; 1322, 1323) are arranged at and/or between the DC outputs of the at least three modules in such a way that, between the at least three modules, at least one series and one parallel circuit configuration can be dynamically set by suitable switching states of the switching elements (222, 223; 422, 423; 522, 523; 622, 623; 722, 723; 1022, 1023; 1122, 1123; 1222, 1223; 1322, 1323), and the operating range of the power electronics system can thereby be toggled dynamically, wherein the power electronics system is configured, at an approximately constant output power, to provide either a peak voltage at rated current or a reduced voltage at a correspondingly increased current depending on requirements by corresponding switching of the switching elements (222, 223; 422, 423; 522, 523; 622, 623; 722, 723; 1022, 1023; 1122, 1123; 1222, 1223; 1322, 1323), **characterized in that** at least one mixed series/parallel circuit configuration can be set dynamically, and the operating range of the power electronics system can thereby be toggled dynamically to one of the at least one charging point, wherein, in the event of a fault in one of the at least three modules, the faulty module is isolated or charge current is routed past the faulty module, respectively, by specifically setting the switching states of the respective switching elements (222, 223; 422, 423; 522, 523; 622, 623; 722, 723; 1022, 1023; 1122, 1123; 1222, 1223; 1322, 1323).

2. Power electronics system according to Claim 1, which further comprises at least one high-voltage store (1215, 1315).

3. Power electronics system according to Claim 1 or 2, in which the switching elements (222, 223; 422, 423; 522, 523; 622, 623; 722, 723; 1022, 1023; 1122, 1123; 1222, 1223; 1322, 1323) are arranged at and/or between the respective terminal pairs of the at least three modules.

4. Power electronics system according to one of the preceding claims, in which at least one module of the at least three modules can be controlled and/or regulated within a specific voltage and/or current range.

5. Power electronics system according to one of the preceding claims, in which each of the at least three modules comprises a rectifier (220, 420, 520, 620, 1020, 1120, 1220, 1320).

6. Power electronics system according to Claim 5, in which at least one module comprises at least one DC/DC converter (210, 410, 610, 710, 1010, 1110, 1210, 1310) connected in series with the rectifier (220, 420, 520, 620, 720, 1020, 1120, 1220, 1320).

7. Power electronics system according to one of Claims 1 to 4, in which each of the at least three modules comprises a DC/DC converter (710), wherein the DC/DC converters (710) of the at least three modules are fed by at least one common rectifier (720).

8. Power electronics system according to one of the preceding claims, in which the respective at least one rectifier (220, 620, 720, 1020, 1220, 1320) is DC-isolating.

9. Power electronics system according to one of Claims 1 to 7, which is not DC-isolating and is configured to the effect that each of the modules can be connected to a DC-isolating transformer (440, 540, 1140) by means of the at least one AC connection.

10. Power electronics system according to Claim 6 or 7, in which the respective at least one DC/DC converter of the at least one module is DC-isolating.

11. Power electronics system according to Claim 9, which is configured to connect the transformer (440, 540, 1140) to the respective AC connection of the respective modules by means of respective undervoltage taps.

12. Power electronics system according to one of the preceding claims, which has more than two modules, wherein the modules can be interconnected with one another in a reconfigurable manner in series, in parallel or in mixed series-parallel.

13. Power electronics system according to one of the preceding claims, in which at least one portion of the switching elements is configured to enable reconfiguration of the power electronics system without interruption by changing the interconnection of the switching elements (222, 223; 422, 423; 522, 523; 622, 623; 722, 723; 1022, 1023; 1122, 1123; 1222, 1223; 1322, 1323) with one another during operation of the switching electronics system.

14. Power electronics system according to Claim 13, in which the at least one portion of the switching elements (222, 223; 422, 423; 522, 523; 622, 623; 722, 723; 1022, 1023; 1122, 1123; 1222, 1223; 1322, 1323) comprises disconnectable switching elements, in particular disconnectable semiconductor switches, in particular IGBTs or FETs.

15. Power electronics system according to one of Claims 1 to 12, in which reconfiguration of the power electronics system can be realized without power by changing the interconnection of the switching elements (222, 223; 422, 423; 522, 523; 622, 623; 722, 723; 1022, 1023; 1122, 1123; 1222, 1223; 1322, 1323) with one another.

16. Power electronics system according to one of Claims 5 to 15, in which the rectifiers (220, 420, 520, 620, 1020, 1120, 1220, 1320) of the respective modules comprise windings that are offset with respect to one another, with the result that disturbances occurring in the respective modules are orthogonal with respect to one another.

17. Power electronics system according to one of the preceding claims, which comprises at least one redundancy module, which, in the event of a failure of one of the at least two modules, functionally replaces the faulty module by suitably changing the switching states of the respective switching elements (222, 223; 422, 423; 522, 523; 622, 623; 722, 723; 1022, 1023; 1122, 1123; 1222, 1223; 1322, 1323).

18. Power electronics system according to one of the preceding claims, in which respective clockings of the individual modules are offset either asynchronously or in a targeted manner against one another.

19. Method for charging at least one electrically operated vehicle (230, 430, 530, 630, 730, 1030, 1130, 1230, 1330), in which a power electronics system according to one of the preceding claims is used.

20. Method according to Claim 19, in which the power electronics system is fed with a medium voltage by means of a transformer connected in between and furnished with DC isolation.

## Revendications

1. Électronique de puissance destinée à charger au moins un véhicule électrique (230, 430, 530, 630, 730, 1030, 1130, 1230, 1330), l'électronique de puissance comportant au moins trois modules pourvus chacun d'au moins une paire de bornes à sortie CC, au moins un redresseur (220, 420, 520, 620, 720, 1020, 1120, 1220, 1320), au moins une entrée CA (221, 621, 721, 1021, 1121, 1221, 1321), au moins un circuit intermédiaire à tension continue (711, 1011, 1111, 1211, 1311) et un certain nombre d'éléments de commutation (222, 223 ; 422, 423 ; 522, 523 ; 622, 623 ; 722, 723 ; 1022, 1023 ; 1122, 1123 ; 1222, 1223 ; 1322, 1323), électronique dans laquelle les sorties CC respectives des au moins trois modules peuvent être reliées sélectivement par le biais des éléments de commutation (222, 223 ; 422, 423 ; 522, 523 ; 622, 623 ; 722, 723 ; 1022, 1023 ; 1122, 1123 ; 1222, 1223 ; 1322, 1323) en formant au moins un point de charge destiné à charger l'au moins un véhicule électrique (230, 430, 530, 630, 730, 1030, 1130, 1230, 1330), les éléments de commutation (222, 223 ; 422, 423 ; 522, 523 ; 622, 623 ; 722, 723 ; 1022, 1023 ; 1122, 1123 ; 1222, 1223 ; 1322, 1323) étant disposés au niveau des sorties CC des au moins trois modules et/ou entre celles-ci de telle sorte que, entre les au moins trois modules, au moins une configuration de circuit série et une configuration de circuit parallèle puissent être réglées dynamiquement par des états de commutation appropriés des éléments de commutation (222, 223 ; 422, 423 ; 522, 523 ; 622, 623 ; 722, 723 ; 1022, 1023 ; 1122, 1123 ; 1222, 1223 ; 1322, 1323), et ainsi la plage de fonctionnement de l'électronique de puissance puisse être commutée dynamiquement, l'électronique de puissance étant conçue pour fournir en fonction de la demande, pour une puissance de sortie approximativement constante, soit une tension de crête en cas de courant nominal soit une tension réduite en cas de courant augmenté de manière correspondante par une commutation correspondante des éléments de commutation (222, 223 ; 422, 423 ; 522, 523 ; 622, 623 ; 722, 723 ; 1022, 1023 ; 1122, 1123 ; 1222, 1223 ; 1322, 1323), **caractérisée en ce qu'**au moins une configuration mixte de circuits série/parallèle est réglable dynamiquement, et ainsi la plage de fonctionnement de l'électronique de puissance peut être commutée dynamiquement sur l'un des au moins un point de charge, en cas de défaut de l'un des au moins trois modules, le module défectueux est isolé ou le courant de charge est conduit au-delà du module défectueux par un réglage spécifique des états de commutation des éléments de commutation respectifs (222, 223 ; 422, 423 ; 522, 523 ; 622, 623 ; 722, 723 ; 1022, 1023 ; 1122, 1123 ; 1222, 1223 ; 1322, 1323).

2. Électronique de puissance selon la revendication 1, qui comprend en outre au moins un accumulateur à haute tension (1215, 1315).

3. Électronique de puissance selon la revendication 1 ou 2, dans laquelle les éléments de circuit (222, 223 ; 422, 423 ; 522, 523 ; 622, 623 ; 722, 723 ; 1022, 1023 ; 1122, 1123 ; 1222, 1223 ; 1322, 1323) sont disposés au niveau des paires respectives de bornes des au moins trois modules et/ou entre celles-ci.

4. Électronique de puissance selon l'une des revendications précédentes, dans laquelle au moins un module des au moins trois modules peut être commandé et/ou régulé dans une plage de tension et/ou de courant spécifique.

5. Électronique de puissance selon l'une des revendications précédentes, dans laquelle chacun des au moins trois modules comprend un redresseur (220, 420, 520, 620, 1020, 1120, 1220, 1320).

6. Électronique de puissance selon la revendication 5, dans laquelle au moins un module comporte au moins un convertisseur CC/CC (210, 410, 610, 710, 1010, 1110, 1210, 1310) monté en série avec le redresseur (220, 420, 520, 620, 720, 1020, 1120, 1220, 1320).

7. Électronique de puissance selon l'une des revendications 1 à 4, dans laquelle chacun des au moins trois modules comprend un convertisseur CC/CC (710), les convertisseurs CC/CC (710) des au moins trois modules étant alimentés par au moins un redresseur commun (720).

8. Électronique de puissance selon l'une des revendications précédentes, dans laquelle l'au moins un redresseur respectif (220, 620, 720, 1020, 1220, 1320) est galvaniquement isolant.

9. Électronique de puissance selon l'une des revendications 1 à 7, qui ne comporte pas de séparation galvanique et qui est conçue pour que les modules puissent chacun être reliés à un transformateur à séparation galvanique (440, 540, 1140) par l'au moins une borne AC.

10. Électronique de puissance selon la revendication 6 ou 7, dans laquelle l'au moins un convertisseur CC/CC respectif de l'au moins un module est galvaniquement isolant.

11. Électronique de puissance selon la revendication 9, qui est conçue pour relier le transformateur (440, 540, 1140) à la borne AC respective des modules respectifs par le biais de prises de basse tension respectives.

12. Électronique de puissance selon l'une des revendications précédentes, qui comporte plus de deux modules, les modules pouvant être montés entre eux de manière reconfigurable en série, en parallèle ou de façon mixte en série et parallèle.

13. Électronique de puissance selon l'une des revendications précédentes, dans laquelle au moins une partie des éléments de commutation sont conçus pour reconfigurer l'électronique de puissance en modifiant le montage des éléments de commutation (222, 223 ; 422, 423 ; 522, 523 ; 622, 623 ; 722, 723 ; 1022, 1023 ; 1122, 1123 ; 1222, 1223 ; 1322, 1323) entre eux sans interruption pendant le fonctionnement de l'électronique de commutation.

14. Électronique de puissance selon la revendication 13, dans laquelle au moins une partie des éléments de commutation (222, 223 ; 422, 423 ; 522, 523 ; 622, 623 ; 722, 723 ; 1022, 1023 ; 1122, 1123 ; 1222, 1223 ; 1322, 1323) comprend des éléments de commutation commutables, en particulier des commutateurs à semi-conducteurs commutables, notamment des IGBT ou FET.

15. Électronique de puissance selon l'une des revendications 1 à 12, dans laquelle une reconfiguration de l'électronique de puissance par modification du câblage des éléments de commutation (222, 223 ; 422, 423 ; 522, 523 ; 622, 623 ; 722, 723 ; 1022, 1023 ; 1122, 1123 ; 1222, 1223 ; 1322, 1323) peut être effectuée sans alimentation.

16. Électronique de puissance selon l'une des revendications 5 à 15, dans laquelle les redresseurs (220, 420, 520, 620, 1020, 1120, 1220, 1320) des modules respectifs comprennent des enroulements décalés les uns des autres de sorte que des perturbations, qui surviennent, des modules respectifs sont orthogonales les unes aux autres.

17. Électronique de puissance selon l'une des revendications précédentes, comprenant au moins un module de redondance, qui en cas de panne de l'un des au moins deux modules par un changement approprié des états de commutation des éléments de commutation respectifs (222, 223 ; 422, 423 ; 522, 523 ; 622, 623 ; 722, 723 ; 1022, 1023 ; 1122, 1123 ; 1222, 1223 ; 1322, 1323) remplace le module défectueux de manière fonctionnellement correcte.

18. Électronique de puissance selon l'une des revendications précédentes, dans laquelle des horloges respectives des modules individuels sont décalées les unes des autres soit de manière asynchrone, soit de manière précise.

19. Procédé de charge d'au moins un véhicule électrique (230, 430, 530, 630, 730, 1030, 1130, 1230, 1330), dans lequel une électronique de puissance selon l'une des revendications précédentes est utilisée.

20. Procédé selon la revendication 19, dans lequel l'électronique de puissance est alimentée en moyenne tension par le biais d'un transformateur intermédiaire équipé d'une isolation galvanique.
